# EUROPEAN PATENT APPLICATION

(11) **EP 0 589 137 A1**
(43) Date of publication of application: **30.03.1994**
(21) Application number: 93105281.5
(22) Date of filing: 30.03.1993
(51) Int. Cl.: C22C 32/00

(54) **Wear resistant sliding member and method of manufacturing the same**

(30) Priority: 29.09.1992 JP 260341/92; 26.02.1993 JP 38470/93
(71) Applicant: Mazda Motor Corporation, Aki-gun Hiroshima-ken (JP); MAZDA MICRON CORPORATION, Higashihiroshima-shi, Hiroshima-ken (JP)
(72) Inventor: Tanita, Yoshio, c/o Mazda Motor Corp., Aki-gun, Hiroshima-ken (JP); Sugimoto, Yukihiro, c/o Mazda Motor Corp., Aki-gun, Hiroshima-ken (JP); Motonaga, Takao, c/o Mazda Micron Corp., Higashihiroshima-shi, Hiroshima-ken (JP); Nakamura, Kentaro, c/o Mazda Micron Corp., Higashihiroshima-shi, Hiroshima-ken (JP)
(74) Representative: Müller-Boré & Partner Patentanwälte

(57) **Abstract**

A cylinder liner is manufactured by mixing 2 to 8 percent by weight of silicon particles and 1 to 27 percent by weight of carbon particles with aluminum particles and forming the sliding member by hot compression forming of the mixture.

## Description

### BACKGROUND OF THE INVENTION

### Field of the Invention

This invention relates to a gliding member excellent in wear resistance such as a cylinder liner installed on the cylinder wall of a cylinder block of an engine on which a piston slides and a method of manufacturing the same.

### Description of the Prior Art

The cylinder wall of an engine must have a resistance to wear, and accordingly, in a cylinder block made of aluminum alloy, a cast-iron cylinder liner is conventionally cast in or fit in the cylinder block in order to ensure wear resistance of the cylinder wall.

However when the cast-iron cylinder liner is used, there arises a problem that the overall weight of the cylinder block increases and gas leak and/or coolant leak is apt to occur due to poor adhesion of the cast-iron cylinder liner to the aluminum cylinder block.

In order to overcome such a problem, it has been proposed to form the cylinder iiner from aluminum material obtained by adding silicon to the aluminum material of which the cylinder block is made. For example, in Japanese Unexamined Patent Publication No. 52(1977)-109415, there is disclosed a method of forming a cylinder liner by adding SiC and graphite to aluminum-silicon alloy and extruding the mixture.

However when such aluminum-silicon alloy is employed, there arises the following problem. That is, in the silicon which forms the aluminum-silicon alloy, eutectic silicon cannot contribute to improvement of wear resistance due to its excessively small particle size and only pro-eutectic silicon which is large in particle size contributes to improvement of wear resistance. However it is very difficult to control the particle size of the pro-eutectic silicon and accordingly cylinder liners containing therein pro-eutectic silicon whose particle size is larger than necessary can sometimes be formed. Such cylinder liners are not enough in pro-eutectic silicon retaining strength, are poor in machinability and causes a piston ring to wear soon. Further, though, the silicon particles and the carbon particles must uniformly dispersed in the cylinder liner in order to increase the silicon retaining strength and the carbon retaining strength, it is difficult to uniformly disperse the particles by the conventional method.

The problems described above exists in not only the cylinder liner but also in other various sliding members such as a vane of a car compressor, a valve for an automatic transmission, and an aluminum housing or casing having a sliding portion.

### SUMMARY OF THE INVENTION

In view of the foregoing observations and description, the primary object of the present invention is to provide a sliding member which has high silicon retaining strength and carbon retaining strength, and is excellent in machinability and wear resistance.

Another object of the present invention is to provide a method of manufacturing such a sliding member with ease.

In accordance with the present invention, silicon particles and carbon particles are mixed with aluminum particles in a predetermined proportion in the particle state and the mixture is formed into a sliding member by hot compression forming.

More particularly, 2 to 8 % by weight of silicon particles and 1 to 27 % by weight of carbon particles are mixed with aluminum particles and the mixture is formed into a sliding member by hot compression forming.

In this specification, the term "aluminum particles" should be broadly interpreted to include not only particles of pure aluminum but also particles of various aluminum alloys. Further the term "carbon particles" should be interpreted to include carbon particles having an irregular structure, carbon particles having an irregular structure partly converted into graphite, mixture of carbon particles having an irregular structure and graphite particles, and graphite particles.

By forming mixture of silicon particles, carbon particles and aluminum particles into a sliding member by hot compression forming, the silicon particles and the carbon particles can be uniformly dispersed in the sliding member, and at the same time, the particle size of the silicon particles can be easily controlled to a size which is preferable to improve wear resistance and the particle size of the carbon particles can be easily controlled to a size which is preferable to improve lubricity.

When the silicon particle content is too small (less than 2 wt %), the silicon particles cannot sufficiently contribute to improvement of wear resistance and when it is too large (more than 8 wt %), the sliding member wears hard the part in contact therewith and the sliding member itself is also worn by the resultant powder.

Carbon particles have self lubricity, but when the carbon particle content is too small, the lubricating effect is poor and when it is too large, the lubricating effect is saturated, hot-compression-formability deteriorates and the strength of the formed product greatly deteriorates. Accordingly, in order to obtain sufficient lubricating effect with deterioration in the hot-compression-formability and the strength of the formed product limited within an acceptable range, the carbon particle content should be in the range of 1 to 27 wt%.

Thus in accordance with the present invention, a sliding member which has high silicon retaining strength and carbon retaining strength and is excellent in machinability and wear resistance con be easily manufactured and a required lubricity can be obtained.

It is preferred that the hot compression forming be effected with the aluminum particles in a semi-molten state, which results in a formed product in which missing of silicon particles and carbon particles is less apt to occur and in a formed product having an improved strength (hardness, tensile strength and the like).

When the sliding member is a cylinder liner, it is preferred that the particle size of the silicon particles be in the range of 1 to 40µm and the particle size of the carbon particles be in the range of 0.1 to 40µm. When the particle size of the silicon particles is too large, machinability of the product deteriorates and the cylinder liner wears the piston ring hard. When the particle size of the silicon particles is too small, the wear resistance cannot be improved. When the particle size of the carbon particles is too small, the cylinder liner becomes brittle due to cohesion of the carbon particles, and when it is too large, the particles are more apt to break and be missed.

Further it is preferred that the carbon particle content of the cylinder liner be increased to 12 to 27wt% to improve the lubricity at the portion corresponding to the top dead center where oil is apt to be short.

In the hot compression forming of the mixture of aluminum particles, silicon particles and carbon particles, a formed product whose composition differs from part to part can be easily formed.

Further it is preferred that the carbon particle content be large (12 to 27wt%) at the portion corresponding to the top dead center and be small (1 to 7wt%) at the intermediate portion so that the lubricity is improved where oil is apt to be short and the wear resistance is improved where the piston ring slides at a high speed.

### BRIEF DESCRIPTION OF THE DRAWINGS

Figure 1 is a view for illustrating the steps of manufacturing a sliding member in accordance with an embodiment of the present invention,
Figure 2 is a graph showing the relation between the silicon particle content and the specific wear rate,
Figure 3 is a graph showing the relation between the carbon particle content and the specific wear rate,
Figure 4 is a graph showing the relation between the forming temperature and the hardness and tensile strength of the cylinder liner,
Figure 5 is a graph showing the relation between the forming pressure and the hardness of the cylinder liner, and
Figure 6 is a view similar to Figure 3 but in a modification of the embodiment.

### DESCRIPTION OF THE PREFERRED EMBODIMENT

An embodiment of the present invention where the present invention is applied to manufacture of a cylinder liner will be described with reference to the drawings, hereinbelow.

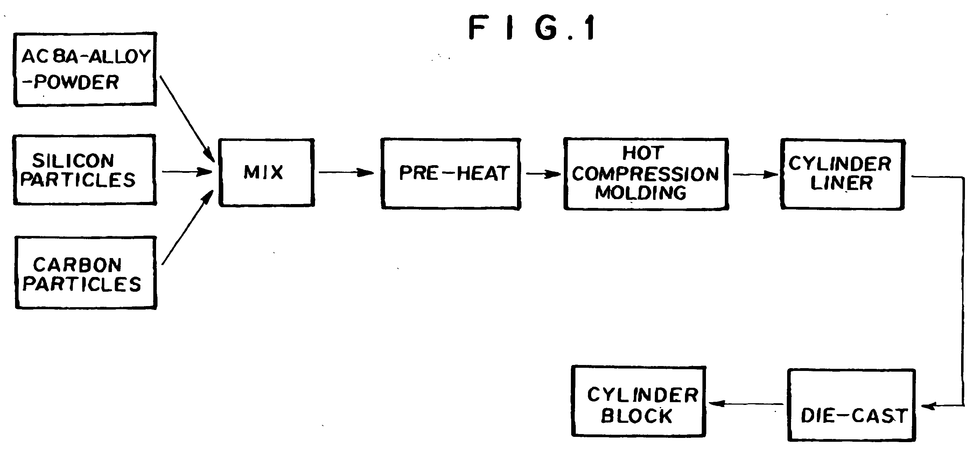

As shown in Figure 1, aluminum particles (AC8A alloy powder) as a mother material, silicon particles for providing wear resistance and carbon particles of irregular structure as a self-lubricating component are prepared. The silicon particles should have a particle size of 1 to 40µm, and the carbon particles should have a particle size of 0.1 to 40µm. Other aluminum alloy powders or pure aluminum powder may be used instead of AC8A alloy powder.

When the particle size of the silicon particles is smaller than 1µm, the wear resistance cannot be improved, and when the particle size of the silicon particles is larger than 40µm, machinability of the cylinder liner deteriorates and the cylinder liner wears the piston ring hard. When the particle size of the carbon particles is smaller than 0.1µm, the cylinder liner becomes brittle due to cohesion of the carbon particles, and when it is large than 40µm, the particles are more apt to break and be missed.

The particles are mixed so that the silicon particle content is 2 to 8 wt% and the carbon particle content is 12 to 27 wt%.

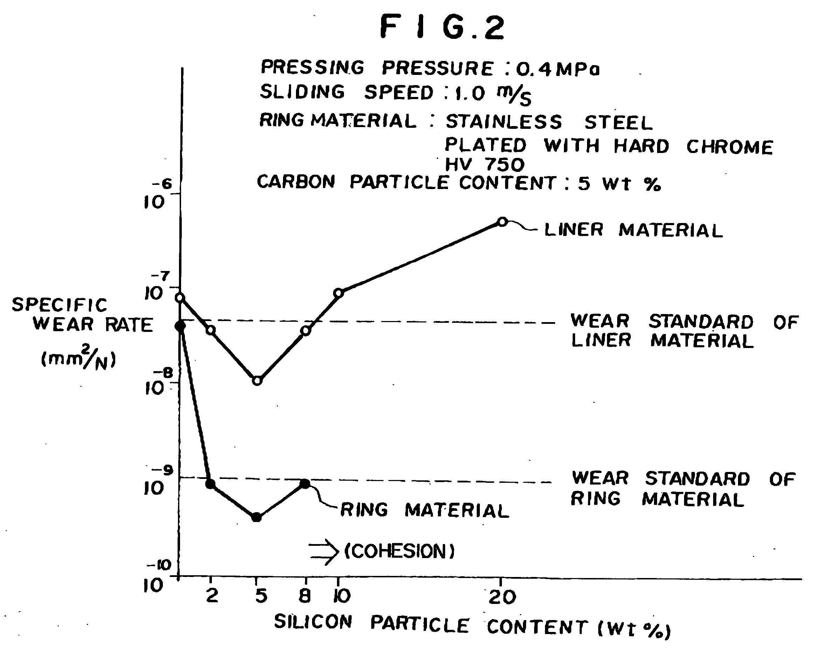

As can be understood from Figure 2, when the silicon particle content is less than 2 wt %, the silicon particles cannot sufficiently contribute to improvement of wear resistance and when it is more than 8 wt %, the cylinder liner wears hard the piston ring and the cylinder liner itself is also worn by the resultant powder.

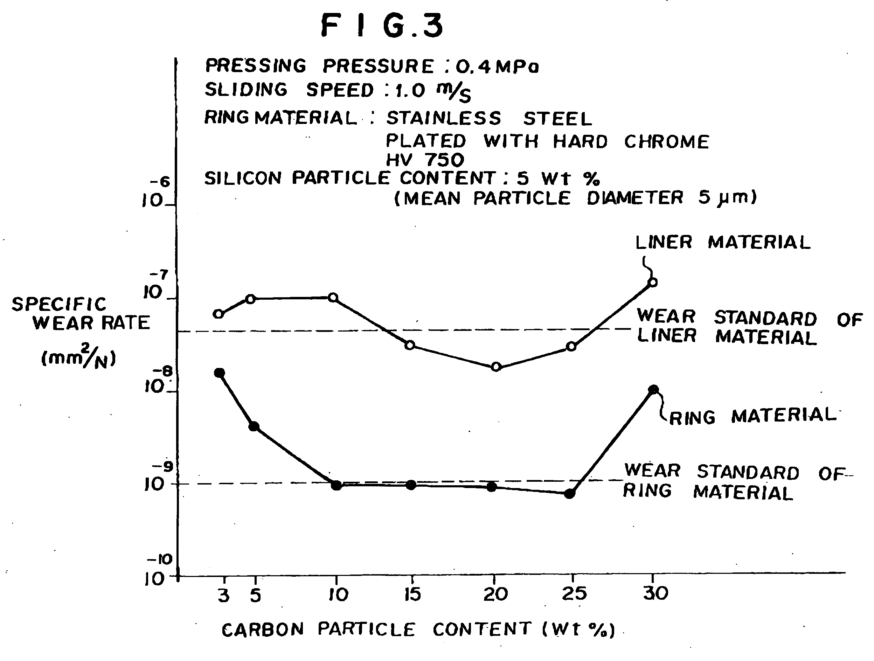

As can be understood from Figure 3, when the carbon particle content is less than 12 wt%, the lubricating effect is poor and wear of the cylinder liner increases, and when it is more than 27wt%, the lubricating effect is saturated to deteriorate the wear resistance, hot-compression-formability deteriorates and the strength of the formed product greatly deteriorates.

The mixture of the particles is loaded in a form and preheated, and then subjected to hot compression forming, thereby forming a cylinder liner.

The preheating is for removing moisture from the particle mixture and shortening the forming time, and the preheating temperature may be about 500°C.

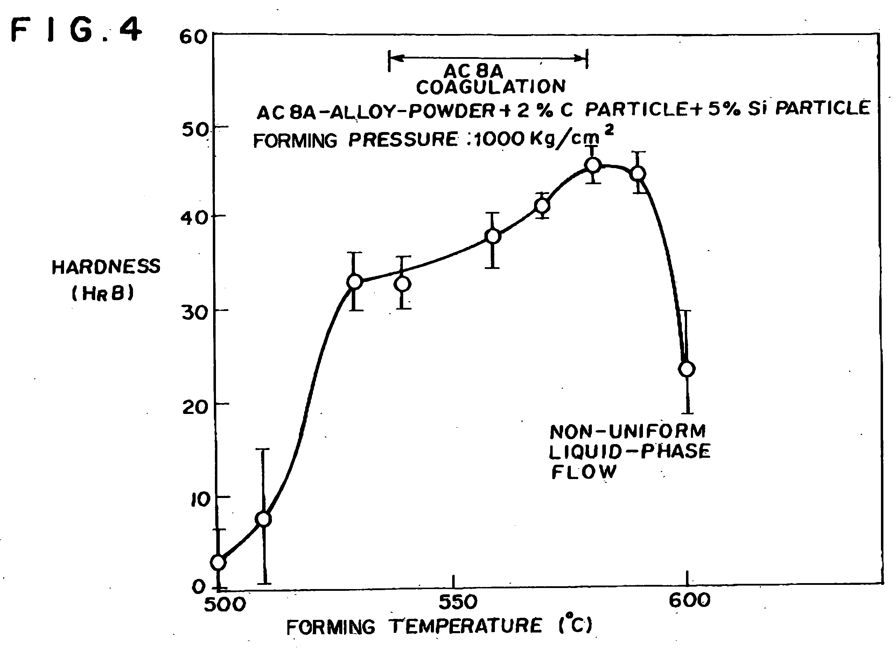

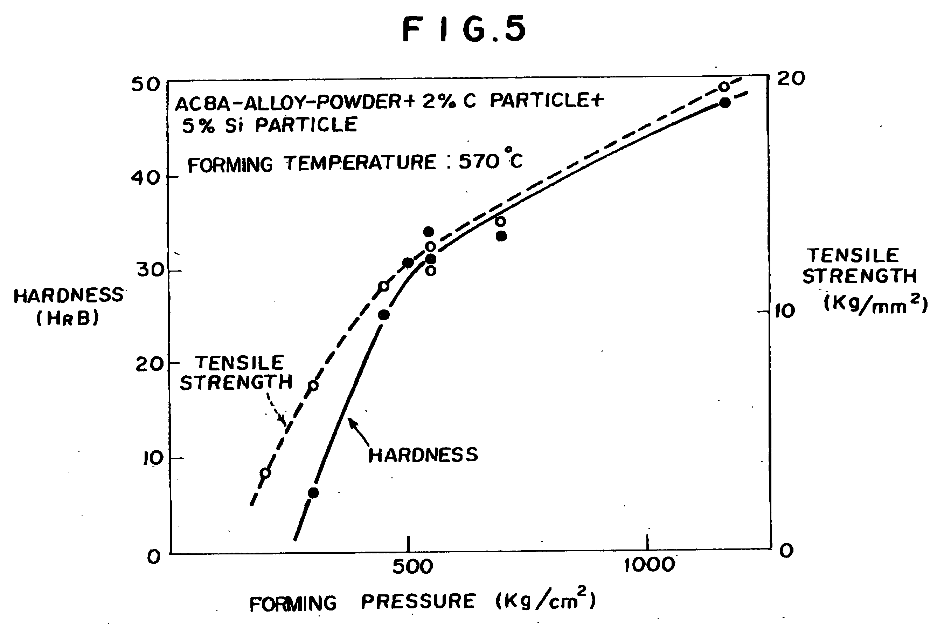

The hot compression forming is effected at a forming temperature of 530 to 590°C, at which the AC8A alloy powder is in a semi-molten state, under a forming pressure of not lower than 500Kg/cm². At a temperature below 530°C, the particles cannot sufficiently solidify and at a temperature above 590°C, only the liquid phase flows upon compression and the particles cannot be uniformly dispersed. That is, by effecting the hot compression forming with the AC8A alloy particles in a semi-molten state, the strength (hardness and tensile, strength) of the cylinder liner can be improved as can be understood from Figure 4. Further by setting the forming pressure not lower than 500Kg/cm², the cylinder liner can be given a sufficient density and a sufficient strength as can be understood from Figure 5.

The cylinder liner thus formed is cast in an aluminum cylinder block by die casting to form a part of the cylinder block.

As can be understood from the description above, in accordance with this embodiment, since mixture of AC8A alloy particles, silicon particles and carbon particles is formed into a cylinder liner by hot compression forming, the silicon particles and the carbon particles can be uniformly dispersed in the cylinder liner.

Further since the silicon particle content and the carbon particle content are limited within the respective ranges described above, the wear resistance of the cylinder liner can be improved without increasing wear of the piston ring and at the same time the lubricity of the cylinder liner can be obtained without deteriorating the hot-compression-formability and the strength of the cylinder liner.

Further by employing the manufacturing method described above, the particle size of the silicon particles and the carbon particles can be easily controlled, and by limiting the particle size of the silicon particles and the carbon particles within the respective ranges described above, the wear resistance of the cylinder liner can be improved with the lubricity of the cylinder liner ensured and without deteriorating the machinability of the cylinder liner and increasing the wear of the piston ring.

Thus in accordance with the embodiment described above, a cylinder liner which has high silicon retaining strength and carbon retaining strength and is excellent in machinability and wear resistance can be easily manufactured and a required lubricity can be obtained.

Though, in the embodiment described above, the silicon particles and the carbon particles are uniformly dispersed in the cylinder liner, the particles may be mixed so that the carbon particle content is large (12 to 27wt%) at the portion corresponding to the top dead center and is small (1 to 7wt%) at the intermediate portion so that the lubricity is improved where oil is apt to be short and the wear resistance is improved where the piston ring slides at a high speed.

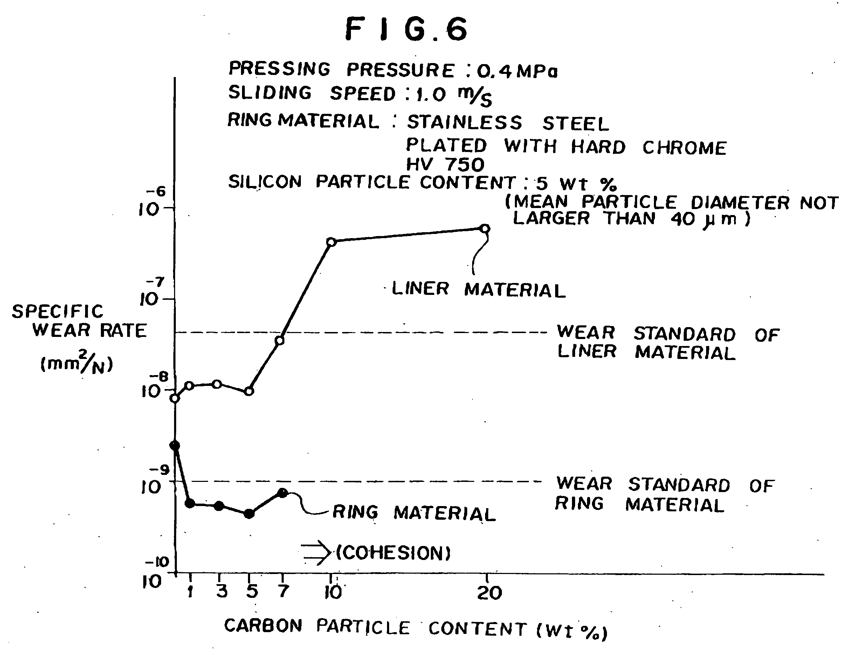

That is, at the intermediate portion of the cylinder liner, the sliding speed of the piston and the piston ring is high and an oil film can be formed more easily than at the portion corresponding to the top dead center. Accordingly, though less carbon particle content, is required at the intermediate portion, the lubricating effect of the carbon particles is saturated and the wear resistance deteriorates when the carbon particle content is less than 1wt%, and the carbon particles cannot be retained in the mother material and missing of the carbon particles is promoted, whereby wear increases when the carbon particle content is more than 7wt% as can be understood from Figure 6. Thus it is preferred that the carbon particle content is in the range of 1 to 7 wt% at the intermediate portion. The sliding speed of 1.0m/s shown in Figure 6 is as measured at a portion slightly below the portion corresponding to the top dead center. Though the sliding speed is higher than 1.0m/s, the carbon particle content may be set on the basis of the result of the experiment at the sliding speed of 1.0m/s.

On the other hand, at the portion of the cylinder liner corresponding to the top dead center, oil is apt to be short due to a low sliding speed of the piston and the piston ring and a high temperature and accordingly more carbon particle content is required. That is, it is preferred that the carbon particle content be in the range of 12 to 27wt% at the portion corresponding to the top dead center as described above in conjunction with Figure 3. The sliding speed of 0.1m/s is a very small value and may be adequately employed as the sliding speed at the top dead center.

Further, though the silicon particle content at the portion of the cylinder liner corresponding to the top dead center is equal to that at the intermediate portion of the cylinder liner, the former may be reduced and the latter may be increased, whereby the wear resistance at the intermediate portion of the cylinder liner where the piston ring slides at a high speed can be ensured and adjusting the carbon particle content to be large at the portion corresponding to the top dead center and small at the intermediate portion is facilitated.

Though, in the embodiment described above, carbon particles having an irregular structure is employed, carbon particles having an irregular structure partly converted into graphite, mixture of carbon particles having an irregular structure and graphite particles, or graphite particles alone may be employed with a better effect.

## Claims

1. A method of manufacturing a sliding member characterized by the steps of mixing 2 to 8 percent by weight of silicon particles and 1 to 27 percent by weight of carbon particles with aluminum particles and forming the sliding member by hot compression forming of the mixture.

2. A method of manufacturing a sliding member as defined in Claim 1 in which said hot compression forming is effected with the aluminum particles in a semi-molten state.

3. A cylinder liner manufactured by mixing 2 to 8 percent by weight of silicon particles and 1 to 27 percent by weight of carbon particles with aluminum particles and forming the sliding member by hot compression forming of the mixture.

4. A cylinder liner as defined in Claim 3 in which the particle size of the silicon particles is in the range of 1 to 40µm and the particle size of the carbon particles is in the range of 0.1 to 40µm.

5. A cylinder liner as defined in Claim 3 or 4 in which the carbon particle content is in the range of 12 to 27 percent by weight.

6. A cylinder liner as defined in Claim 3 or 4 in which the carbon particle content is in the range of 12 to 27 percent by weight at the portion of the cylinder corresponding to the top dead center of a stroke to be received in the cylinder liner and in the range of 1 to 7 percent by weight at an intermediate portion of the cylinder liner.
